# EUROPEAN PATENT APPLICATION

(11) **EP 2 320 632 A1**
(43) Date of publication of application: **11.05.2011**
(21) Application number: 09175060.4
(22) Date of filing: 04.11.2009
(51) Int. Cl.: H04M 3/533, H04M 1/64, H04M 1/725

(54) **System and method of managing voicemail greetings**

(71) Applicant: RESEARCH IN MOTION LIMITED, Waterloo, Ontario N2L 3W8 (CA)
(72) Inventor: Ellis, Patrick D, Rolling Meadows, IL 60008 (US); Balannik, Vadim, Rolling Meadows IL 60008 (US)
(74) Representative: Patel, Binesh

(57) **Abstract**

A wireless handheld telephony device comprising a microprocessor, machine-readable memory, and machine-readable instructions configured to cause the device to: receive from a telecommunications server signals representing a request to establish with the device a communications session for an incoming voice call; using at least one of data coded within the received signals and data associated with at least one application executable by the device, determine whether at least one pre-set voicemail criterion has been satisfied; based on the determination whether at least one pre-set voicemail criterion has been satisfied, select, from a plurality of voicemail data sets stored in memory resident on the device, a voicemail data set to be transmitted to the server; and transmit to the server signals representing the selected voicemail data set.

## Description

### Technical Field

The present disclosure relates generally to wireless devices, and more particularly to a system and method of managing voicemail greetings on a wireless device.

### Background

Mobile communication devices, such as wireless devices, may include a voicemail system for a caller to leave a voicemail when the recipient is away or otherwise not available to take a call.

Conventional voicemail systems support the ability for a user to manually select and set voicemail greetings to be played to a caller. However, the user sometimes forgets to change the voicemail greeting, for example when the user takes an extended vacation. In other situations, changes to the voicemail greeting are based on regular changes, such as the user being home instead of at work, and it is tedious for the user to change the voicemail greeting on a regular basis.

Typically, a voicemail server manages voicemail greetings for the user. Thus, if the user wishes to change a greeting, it is necessary for the user to access the server, either through a computer or otherwise dialing in to the voicemail server. This is inconvenient as the user might wish to change or manage voicemail greetings at a time or place where there is no ready access to the voicemail server.

### Summary

In some aspects, there is provided a method, performed by a wireless handheld telephony device, comprising: receiving, from a telecommunications server, signals representing a request to establish with the device a communications session for an incoming call; determining, using at least one of data coded within the received signals and data associated with at least one application executable by the device, whether at least one pre-set voicemail criterion has been satisfied; selecting, based on the determination whether at least one pre-set voicemail criterion has been satisfied, a voicemail data set from a plurality of voicemail data sets stored in memory resident on the device to be transmitted to the server; and transmitting to the server signals representing the selected voicemail data set.

In some other aspects there is provided a wireless handheld telephony device comprising a microprocessor, machine-readable memory, and machine-readable instructions configured to cause the device to: receive from a telecommunications server signals representing a request to establish with the device a communications session for an incoming voice call; using at least one of data coded within the received signals and data associated with at least one application executable by the device, determine whether at least one pre-set voicemail criterion has been satisfied; based on the determination whether at least one pre-set voicemail criterion has been satisfied, select, from a plurality of voicemail data sets stored in memory resident on the device, a voicemail data set to be transmitted to the server; and transmit to the server signals representing the selected voicemail data set.

In some other aspects, there is provided a computer program product having a computer readable medium tangibly embodying computer executable instructions configured to cause a wireless handheld telephony device to: receive, from a telecommunications server, signals representing a request to establish with the device a communications session for an incoming call; determine, using at least one of data coded within the received signals and data associated with at least one application executable by the device, whether at least one pre-set voicemail criterion has been satisfied; selecting, based on the determination whether at least one pre-set voicemail criterion has been satisfied, a voicemail data set from a plurality of voicemail data sets stored in memory resident on the device to be transmitted to the server; and transmitting to the server signals representing the selected voicemail data set.

### Brief Description of the Drawings

Reference will now be made to the drawings, which show by way of example embodiments of the present disclosure, and in which:

FIG. 1 shows in block diagram form a wireless device suitable for managing voicemail greetings in accordance with an example embodiment;

FIG. 2 shows in block diagram form a communication system suitable for providing the operating environment of the wireless device of FIG. 1 in accordance with an example embodiment;

FIG. 3 shows in block diagram form the contents of a memory of the wireless device of FIG. 1;

FIG. 4 is a flowchart illustrating a method of managing voicemail greetings in accordance with an example embodiment;

FIGS. 5A and 5B illustrate an example of a user interface for setting voicemail greetings in accordance with an example embodiment;

FIGS. 6A and 6B illustrate an example of a user interface for recording voicemail greetings in accordance with an example embodiment;

FIGS. 7A and 7B illustrate an example of a user interface for saving voicemail greetings in accordance with an example embodiment;

FIGS. 8A and 8B illustrate an example of a user interface for associating voicemail greetings with a calendar event in accordance with an example embodiment; and

FIG. 9 is a flowchart illustrating a method of creating a pre-set criterion in accordance with an example embodiment.

It will be noted that throughout the appended drawings, like features are identified by like reference numerals.

### Detailed Description

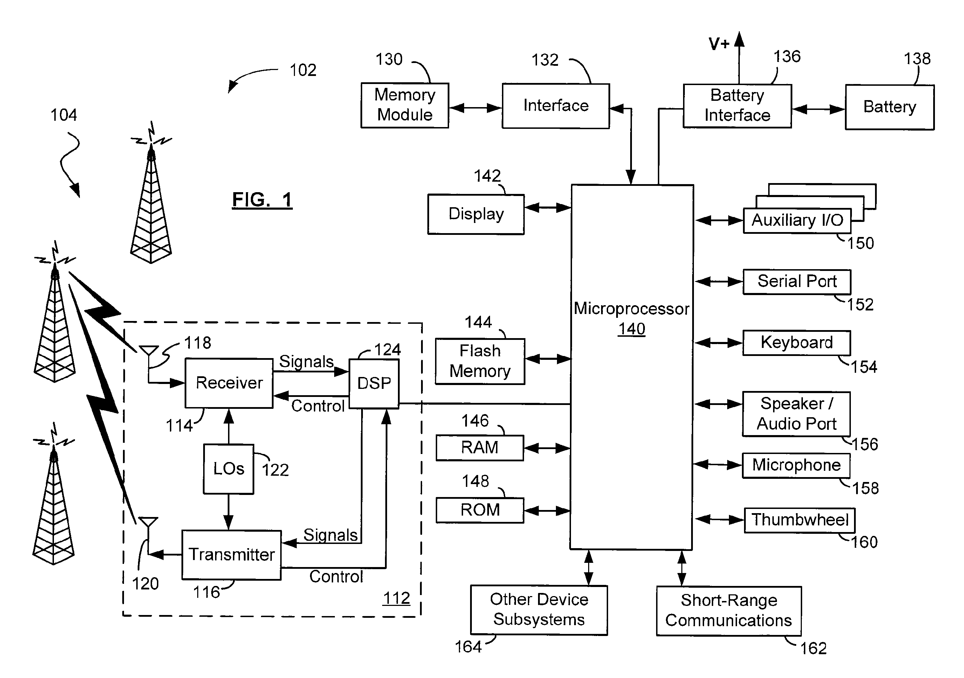

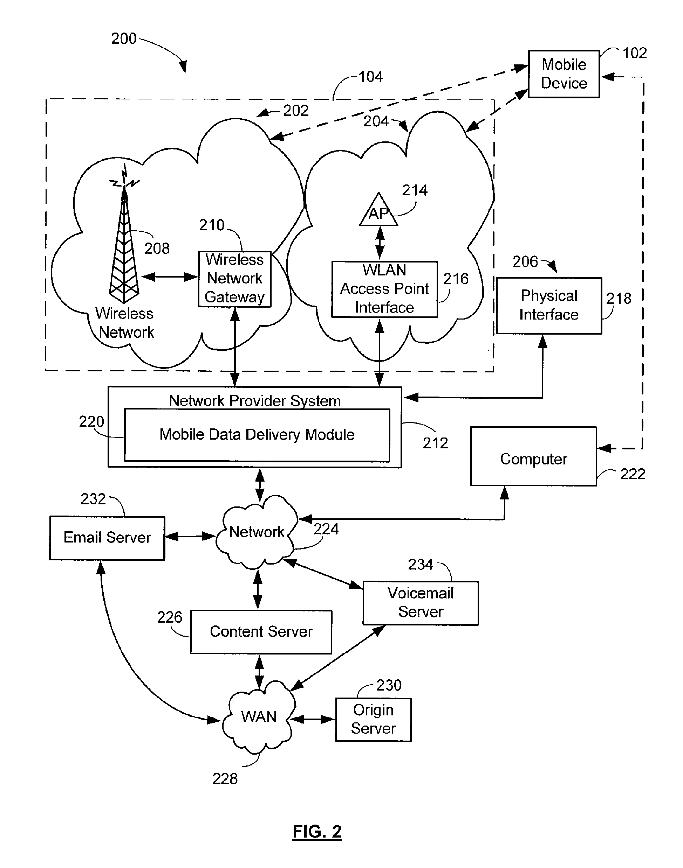

Reference is first made to FIG. 1, which shows a block diagram illustrating an example wireless device 102 suitable for managing voicemail greetings in accordance with an example embodiment of the present disclosure. It will be understood that references to a wireless device in this disclosure may also apply to telephony devices, handheld communications devices, including wireless handheld telephony devices, and any other devices suitable for use in implementing the systems, methods, and programming structures disclosed herein. In the example shown in FIG. 1, the wireless device 102 communicates through a wireless communication network 104. The wireless network 104 may include antennae, base stations, and supporting radio equipment for facilitating wireless communications between the wireless device 102 and other devices connected to wireless network 104. The wireless network 104 may be coupled to a wireless network gateway and to a wide area network, shown in FIG. 2.

In an example embodiment, the wireless device 102 is a two-way mobile communication device, such as a wireless handheld telephony device, having at least voice and data communication capabilities, including the capability to communicate with other computer systems. Depending on the functionality provided by the wireless device 102, it may be referred to as a data messaging device, a two-way pager, a cellular telephone with data messaging capabilities, a wireless Internet appliance, or a data communication device (with or without telephony capabilities). The wireless device 102 may communicate with any one of a plurality of fixed transceiver stations within its geographic coverage area.

In this example, the wireless device 102 incorporates a communication subsystem 112, which includes a receiver 114, a transmitter 116, and associated components, such as one or more antenna elements 118 and 120, local oscillators (LOs) 122, and a processing module such as a digital signal processor (DSP) 124. In an example embodiment, the antenna elements 118 and 120 are embedded or internal to the wireless device 102. As will be apparent to those skilled in the field of communications, the particular design of the communication subsystem 112 may depend on the wireless network 104 in which the wireless device 102 is intended to operate.

The wireless device 102 sends and receives communication signals over the wireless network 104 after the required network registration or activation procedures have been completed. Signals received by the antenna 118 through the wireless network 104 may be input to the receiver 114, which may perform such common receiver functions as signal amplification, frequency down conversion, filtering, channel selection, etc., as well as analog-to-digital (A/D) conversion. A/D conversion of a received signal may allow more complex communication functions such as demodulation and decoding to be performed in the DSP 124. In a similar manner, signals to be transmitted may be processed, including modulation and encoding, for example, by the DSP 124. These DSP-processed signals may be input to the transmitter 116 for digital-to-analog (D/A) conversion, frequency up conversion, filtering, amplification, and transmission to the wireless network 104 via the antenna 120. The DSP 124 may not only process communication signals, but may also provide for receiver and transmitter control. In an example, the gains applied to communication signals in the receiver 114 and the transmitter 116 are adaptively controlled through automatic gain control algorithms implemented in the DSP 124.

Network access may be associated with a subscriber or user of the wireless device 102 via a memory module, such as a memory module 130, which may be a Subscriber Identity Module (SIM) card for use in a GSM network or a Universal Subscriber Identity Module (USIM) card for use in a Universal Mobile Telecommunication System (UMTS). The SIM card may be inserted in or connected to an interface 132 of the wireless device 102 in order to operate in conjunction with the wireless network 104. Alternatively, the wireless device 102 may have an integrated identity module for use with systems such as Code Division Multiple Access (CDMA) systems.

In this example, the wireless device 102 also includes a battery interface 136 for receiving one or more rechargeable batteries 138. The battery 138 provides electrical power to at least some of the electrical circuitry in the wireless device 102, and the battery interface 136 provides a mechanical and electrical connection for the battery 138. The battery interface 136 is coupled to a regulator (not shown) which provides power V+ to the circuitry of the wireless device 102.

The wireless device 102 includes a microprocessor 140 which controls the overall operation of the wireless device 102. Communication functions, including at least data and voice communications, may be performed through the communication subsystem 112. The microprocessor 140 may also interact with additional device subsystems such as a display 142, a flash memory 144, a random access memory (RAM) 146, a read-only memory (ROM) 148, auxiliary input/output (I/O) subsystems 150, a data port such as serial port 152, a keyboard or keypad 154, a speaker or audio port 156 for connecting to, for example a set of headphones or an earpiece, a microphone 158, a clickable thumbwheel or thumbwheel 160, a short-range communications subsystem 162, and any other device subsystems generally designated as 164. In some examples, the display 142 is a touchscreen display and the thumbwheel 160 and the keyboard or keypad 154 are omitted or reduced. Some of the subsystems shown in FIG. 1 may perform communication-related functions, whereas other subsystems may provide "resident" or on-device functions. Notably, some subsystems, such as the keypad 154, the display 142, and the clickable thumbwheel 160, for example, may be used for both communication-related functions, such as displaying notifications or entering a text message for transmission over the wireless network 104, and executing device-resident functions such as a clock, a calculator or a task list. Operating system software used by the microprocessor 140 are stored in a persistent store such as the flash memory 144, which may alternatively be the ROM 148 or similar storage element. Those skilled in the art will appreciate that the operating system, specific device applications, or parts thereof, may be temporarily loaded into a volatile store such as the RAM 146.

The microprocessor 140, in addition to its operating system functions, enables execution of software applications by the wireless device 102. A predetermined set of applications that control basic device operations, including data and voice communication applications, is typically installed on the wireless device 102 during or after manufacture. In this example, the wireless device 102 includes a personal information manager (PIM) application having the ability to organize and manage data items relating to a user such as, but not limited to, instant messaging, email, calendar events, voicemails, appointments, and task items. One or more memory stores may be available on the wireless device 102 to facilitate storage of information, such as the flash memory 144, the RAM 146, the ROM 148, the memory module 130, or other types of memory storage devices or FLASH memory cards represented by the other device subsystems 164, such as Secure Digital (SD) cards or mini SD cards, etc.

In this example, the PIM and/or media applications have the ability to send and receive data items via either the wireless network 104 or a link to a computer system. The link to the computer system may be via the serial port 152 or the short-range communications subsystem 162. In an example embodiment, PIM and/or media data items are seamlessly combined, synchronized, and updated via the wireless network 104, with the wireless device user's corresponding data items stored and/or associated with a host computer system thereby creating a mirrored or partially mirrored host computer on the wireless device 102 with respect to such items. This may be useful where the host computer system is the wireless device user's office computer system. Additional applications may also be loaded onto the wireless device 102 through the wireless network 104, the auxiliary I/O subsystem 150, the serial port 152, the short-range communications subsystem 162, or any other suitable subsystem 164, and installed by a user in the RAM 146 or a non-volatile store such as the ROM 148 for execution by the microprocessor 140. Such flexibility in application installation may increase the functionality of the wireless device 102 and may provide enhanced on-device functions, communication-related functions, or both. For example, secure communication applications may enable electronic commerce functions and other such financial transactions to be performed using the wireless device 102.

In this example, in a data communication mode, a received data signal representing information such as a text message, an email message, a media file to be transferred, or Web page download is processed by the communication subsystem 112 and is input to the microprocessor 140. The microprocessor 140 further processes the signal for output to the display 142, or alternatively to the auxiliary I/O device 150. A user of the wireless device 102 may also compose data items, such as email messages, for example, using the keypad 154 and/or the clickable thumbwheel 160 in conjunction with the primary display 142 and possibly the auxiliary I/O device 150. The keypad 154 may be either a complete alphanumeric keypad or telephone-type keypad. These composed items are transmitted through the communication subsystem 112 over the wireless network 104 or via the short range communication subsystem 162.

In this example, for voice communications (e.g., an incoming call or a voicemail message), the overall operation of the wireless device 102 is similar, except that the received signals are output to the speaker or audio port 156 and signals for transmission would be generated by a transducer such as the microphone 158. Alternative voice or audio I/O subsystems, such as a voice message recording subsystem, may also be implemented on the wireless device 102. Although voice or audio signal output are typically accomplished primarily through the speaker or audio port 156, the display 142 may also be used to provide an indication of the identity of a calling party, duration of a voice call, or other voice call related information. Stereo headphones or an earpiece may also be used in place of the speaker 156.

The serial port 152 may be normally implemented in a personal digital assistant (PDA) type communication device for which synchronization with a user's computer is a desirable, albeit optional, component. The serial port 152 enables a user to set preferences through an external device or software application and may extend the capabilities of the wireless device 102 by providing for information or software downloads to the wireless device 102 other than through the wireless network 104. The alternate download path may, for example, be used to load software or data files onto the wireless device 102 through a direct, reliable and trusted connection.

In this example, the short-range communications subsystem 162 is an additional optional component which provides for communication between the wireless device 102 and different systems or devices, which need not necessarily be similar devices. For example, the subsystem 162 may include an infrared device and associated circuits and components, or a wireless bus protocol compliant communication mechanism such as a Bluetooth™ communication module to provide for communication with similarly-enabled systems and devices (Bluetooth™ is a registered trademark of Bluetooth SIG, Inc.). In another example embodiment, the short-range communications subsystem 162 may be a wireless networking communications subsystem, conforming to IEEE 802.11 standards such as one or more of 802.11b, 802.11g, or 802.11n.

Reference is next made to FIG. 2, which shows a communication system 200 suitable for use with the wireless device 102 shown in FIG. 1. In this example, the communication system 200 generally includes one or more wireless devices 102 (only one of which is shown in FIG. 2) and the wireless network 104. The wireless network 104 includes a wireless Wide Area Network (WAN) 202, a Wireless Local Area Network (WLAN) 204, and/or other interfaces 206 (which may not necessarily be wireless).

Referring to FIG. 2, the wireless WAN 202 may be implemented as a packet-based cellular or mobile network that includes a number of base stations 208 (for simplicity, only one of which is shown in FIG. 2A) where each of the base stations 208 provides wireless Radio Frequency (RF) coverage to a corresponding area or cell. The wireless WAN 202 may be typically operated by a cellular network service provider that sells subscription packages to users of the wireless devices 102. The wireless WAN 202 may comprise a number of different types of networks, for example, Mobitex Radio Network, DataTAC, GSM (Global System for Mobile Communication), GPRS (General Packet Radio System), TDMA (Time Division Multiple Access), CDMA (Code Division Multiple Access), CDPD (Cellular Digital Packet Data), iDEN (integrated Digital Enhanced Network) or various other third generation networks such as EDGE (Enhanced Data rates for GSM Evolution), UMTS (Universal Mobile Telecommunications Systems), or Evolution-Data Optimized (EV-DO).

As shown in FIG. 2, the communications system 200 in this example also includes a wireless network gateway 210 and one or more network provider systems 212. The wireless network gateway 210 may provide translation and routing services between the network provider system(s) 212 and the WAN 202, which may facilitate communication between the wireless devices 102 and other devices (not shown) connected, directly or indirectly, to the network provider system 212.

The WLAN 204 may comprise a network which in some examples conforms to IEEE 802.11 standards such as one or more of 802.11b, 802.11g, or 802.11n; however, other communications protocols may also be used for the WLAN 204. The WLAN 204 may include one or more wireless RF Access Points (AP) 214 (one of which is shown in FIG. 2A) that collectively provide a WLAN coverage area. For the example embodiment depicted in FIG. 2A, the WLAN 204 may be operated by an enterprise (for example, a business or university in a building or campus type environment) and the access points 214 may be connected to an access point (AP) interface 216. The AP interface 216 may provide translation and routing services between the access points 214 and the network provider system 212 to facilitate communication between two or more of the wireless devices 102 and other devices (e.g., such as desktop computers) connected, directly or indirectly, to the network provider system 212. The AP interface 216 may be implemented using a computer, for example, a server running a suitable computer program or software.

According to an example embodiment, the other interfaces 206 are implemented using a physical interface indicated by reference 218. The physical interface 218 may include an Ethernet, Universal Serial Bus (USB), Firewire, or infrared (IR) connection implemented to exchange information between the network provider system 212 and the wireless device 102.

In this example, the network provider system 212 comprises a telecommunications server or server modules or a number of servers or server modules which are typically located behind a firewall (not shown). The network provider system 212 may include a number of modules including a mobile data delivery module 220. Various modules running on the network provider system 212 may be implemented as a number of services running on a single telecommunications server or as a number of interconnected servers each running a software program to implement the functionality of the respective module. The network provider system 212 may provide access for the wireless devices 102, through either the wireless WAN 202, the WLAN 204, or the other connection 206 to the devices connected, for example, through an enterprise network 224 (e.g., an intranet), to the network provider system 212. In an example embodiment, the data delivery module 220 may be implemented on a computer, such as the network provider system 212.

In this example, the enterprise network 224 comprises a local area network, an intranet, the Internet, a direct connection, or combinations thereof. The enterprise network 224 may comprise an intranet for a corporation or other type of organization. In at least some example embodiments, the network provider system 212 may be part of the enterprise network 224, and may be located behind a corporate firewall and connected to the wireless network gateway 210 through the Internet. A computer 222 (e.g., a desktop or laptop computer) belonging to the user of the wireless device 102 may be connected to the enterprise network 224. As described earlier, the wireless device 102 may be temporarily and directly connected to the computer 222 using, for example, the serial port 152. Alternatively, the wireless device 102 may communicate with the computer 222 using the communication subsystem 112 and the WAN 202 and/or the short-range communications subsystem 162 and the WLAN 204.

As shown in FIG. 2, an application/content server 226 may be connected to the enterprise network 224 and also to another network, for example a Wide Area Network (WAN) 228. In some example embodiments, telecommunications servers, such as an email server 232, a voicemail server 234 and/or the content server 226, form part of the enterprise network 224. The WAN 228 may further connect to other networks. The WAN 228 may comprise or be configured with the Internet, a direct connection, a LAN, a wireless communication link, or any combination thereof. Content providers, such as Web servers, may be connected to the WAN 228, an example of which is shown in FIG. 2 as an origin server 230.

According to an example embodiment, the mobile data delivery module 220 provides connectivity between the wireless WAN 202 and the WLAN 204 and the other connection 206 and devices and/or networks connected directly or indirectly to the network provider system 212. In an example embodiment, the connectivity provided is Hypertext Transfer Protocol (HTTP) based connectivity providing an Internet based service connection to devices connected to the wireless WAN 202, the WLAN 204, or the other connection 206 and devices and/or networks connected directly or indirectly to the network provider system 212. The network 224, the application/content server 226, the WAN 228, and the origin server 230, may individually and/or collectively in various combinations act as a content source for the network provider system 212. It will be appreciated that the system shown in FIG. 2 comprises but one possible communication network or configuration of a multitude of possible configurations for use with the wireless devices 102.

The voicemail server 234 typically provides voicemail services to the wireless device 102, including storing and retrieving voicemail greetings, which may be stored as voicemail data sets, and providing a voicemail greeting to an incoming caller. The voicemail server 234 provides services for receiving voicemail when the user of the wireless device 102 cannot or does not want to answer an incoming call. In this situation, the incoming call is forwarded to the voicemail server 234 that plays a voicemail greeting and allows the caller of the incoming call to leave a voicemail message. The voicemail message is stored for later retrieval by the wireless device 102. The wireless device 102 is notified by the voicemail server 234 that there is a new voicemail message to be retrieved. Although the voicemail server 234 is shown as communicating with the network 224 and the WAN 228, other communication links are possible, and different links within the communication system 200 may be used by different carriers.

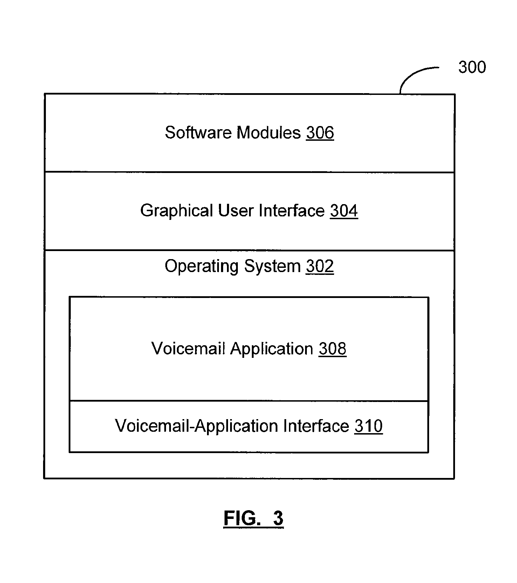

Reference is next made to FIG. 3, which shows a block diagram illustrating an example memory 300 of the wireless device 102. The memory 300 has various software components for controlling the wireless device 102 and may include, for example, the flash memory 144, the RAM 146, the ROM 148, the memory module 130 and/or the other device subsystems 164. In accordance with an example embodiment, the wireless device 102 is a wireless handheld telephony device for sending and receiving data items, such as instant messages, for making and receiving voice calls, and for creating events and alerts. To provide a user-friendly environment to control the operation of the wireless device 102, an operating system (OS) 302 resident on the wireless device 102 may provide a basic set of operations for supporting various applications typically operable through a user interface such as a graphical user interface (GUI) 304.

In some examples, the OS comprises a voicemail application 308 for accessing and managing voicemails. The voicemail application 308 includes a voicemail-application interface 310, as will be described below. In an example, the operating system 302 provides basic input/output system features to obtain input from the auxiliary I/O 150, the keypad 154, the clickable thumbwheel 160, and other input devices, and to facilitate output to the user via at least one of the primary display 142. The GUI 304 is typically a component of the OS 302. One or more software modules 306 for managing communications or providing a personal digital assistant (PDA) or other functions may also be included.

Applications stored in memory 300 may include an email and calendar client, which may be combined in, for example, a PIM application having email-based calendaring and scheduling functions. Typically, the PIM may be installed as one of the software modules 306. In some examples, the voicemail application 308 is included among the software modules 306. Thus, the wireless device 102 may include computer executable programmed instructions for directing the wireless device 102 to implement various applications. The instructions may be tangibly embodied in the one or more software modules 306 resident in the memory 300 of the wireless device 102. Alternatively, the programmed instructions may be tangibly embodied on a computer readable medium (such as a DVD, CD, floppy disk or other storage media) having computer executable code or instructions tangibly recorded thereon, which may be used for transporting the programmed instructions to the memory 300 of the wireless device 102. Alternatively, the programmed instructions may be embedded in a computer-readable, signal that may be uploaded to the wireless network 104 by a vendor or supplier of the programmed instructions, and this signal may be downloaded through one or more of the interfaces 112, 150, 152, 162 to the wireless device 102 from, for example, the wireless network 104 by end users.

The present disclosure provides a way to manage voicemail greetings automatically or dynamically, i.e., with or without input by a user of a telephony device of confirmatory or other command signals. The voicemail greetings are automatically or dynamically managed based on at least one pre-set criterion, such as a profile setting designation, a battery level designation, a time designation, an event designation, a caller designation, a speed designation and a location designation, among others.

The voicemail application 308, which in some examples is a visual voicemail application, facilitates interactions with the voicemail server 234. For example, the voicemail application 308 receives notifications from the voicemail server 234 of any unread voicemails, and the voicemail application 308 transmits voicemail configuration settings and voicemail data sets to the voicemail server 234, including setting up voicemail greetings.

The voicemail application 308 provides the user with a way to define pre-set criteria for selecting certain desired voicemail greetings under various conditions. Typically, the voicemail application 308 facilitates this process by providing a user interface, for example with option boxes and/or drop-down menus, through which the user can define the criterion and select a desired voicemail greeting to be played when that criterion is satisfied. The voicemail application 308, in response to a notification from the voicemail server 234 that a new voicemail message has been stored for the user, provides notification to the user about any new voicemail messages for the user and allows the user to retrieve and play voicemail messages. Other options provided by the voicemail application 308, in some examples, include options to setup or record voicemail greetings, change voicemail access passwords, delete or move voicemail messages, forward voicemail messages (e.g., via audio files using protocols such as MMS or email), and reply to sender by phone or other protocols.

The voicemail-application interface 310 provides an interface between the voicemail application 308 and at least one application, function and/or service (e.g., calendar data, location information, current profile settings, etc.) executable by the wireless device 102. The voicemail-application interface 310 queries the at least one application, function and/or service for information and provides this information to the voicemail application 308. The information obtained by the voicemail-application interface 310 is used for managing voicemail greetings. In some examples, the voicemail-application interface 310 has components for interacting with different applications, functions or services on the wireless device 102 and/or for responding to changes on the wireless device 102 (e.g., change in battery level, change in profile setting).

Voicemail application 308 includes at least one stored voicemail data set (which represents a voicemail greeting) and at least one stored pre-set criterion for selecting a voicemail data set. In some examples, the voicemail data set can comprise a default greeting or can be specific to the pre-set criterion. The pre-set criterion is typically pre-set by the user, for example using a voicemail user interface on the wireless device 102, as will be described further below; however, pre-set criteria may alternatively or in addition be set by someone other than the user, such as for example an administrator associated with the voicemail application. Each pre-set criterion is associated with at least one voicemail data set, such that when the pre-set criterion is determined to have been satisfied, the respective associated voicemail data set is selected to be transmitted to the voicemail server 234 for use. Determination of whether any one pre-set criterion is satisfied is carried out by the voicemail application 308 based on information from at least one application, function and/or service of the wireless device 102, such as information obtained via a query by the voicemail-application interface 310.

In some examples, where no pre-set criterion is satisfied, a default voicemail data set is used. The default voicemail data set can be either provided to the voicemail server 234 by the voicemail application 308 (e.g., a default greeting set by the user on the wireless device 102) or can be a default greeting already available at the voicemail server 234 (e.g., a generic default greeting not specific to any user).

In some examples, where two or more conflicting pre-set criteria are satisfied (e.g., two different criteria each respectively associated with a different voicemail data set are both satisfied) selection of the voicemail data set to use is based on a priority ranking of the conflicting criteria, such that a higher priority criterion that is satisfied takes precedence over a lower priority criterion that is satisfied. Thus, a voicemail data set associated with a higher priority criterion will be used instead of a voicemail data set associated with a lower priority conflicting criterion, in the event that both criteria are satisfied.

In some examples, where a voicemail greeting is set without using the voicemail application 308, such as where the user calls in to the voicemail server 234 using a conventional telephone voicemail system, there is no option for pre-setting criteria, and the voicemail greeting is set as the default greeting.

Examples ofpre-set criteria for selecting a voicemail data set include:

A profile setting designation specifying a profile setting for the wireless device 102 (e.g., quiet, urgent only);

A battery level designation specifying a battery power for the wireless device 102 (e.g., fully charged, low power);

An event designation specifying a scheduled event;

A time designation specifying a particular time;

A location designation specifying a certain location;

A speed designation specifying a certain speed (e.g., below a maximum speed, within a designated speed range, above a minimum speed);

A caller designation specifying a certain caller (e.g., based on the caller identification provided by the voicemail server 234).

Examples of applications and/or services queried by the voicemail-application interface 310 include:

Device manager, for example to obtain information about the profile setting or battery level of the wireless device 102 or the current time;

Global Positioning System (GPS) application, for example to obtain information about the location or speed of the wireless device 102;

Address book application, for example to obtain information about the priority of a caller;

Calendar application, for example to obtain information about any scheduled events or availability status.

In some examples at least one pre-set criterion is a logical combination of two or more individual criteria. For example, a possible pre-set criterion is that a certain voicemail data set should be selected when an event criterion and a caller criterion are both satisfied. Another possible pre-set criterion is that a certain voicemail data set should be selected when a location criterion is satisfied but not at a certain time period. Other logical combinations are possible, involving more criteria combined using different logical operators.

The selection of the voicemail data set is carried out by the voicemail application 308, using the voicemail-application interface 310, and the selected voicemail data set is transmitted to the voicemail server 234. Thus, the voicemail server 234 does not need to participate in the selection of the voicemail data set or setting of any criteria. The user also does not need to interact with the voicemail server 234 in order to manage voicemail greetings, record voicemail greetings or set criteria, but rather is able to manage voicemail greetings entirely through the voicemail application 308 on the wireless device 102. This avoids the hassle of the user having to access the voicemail server 234, for example through a desktop computer, and allows the managing of voicemail greetings even when there is no access to the voicemail server 234, such as when the wireless device 102 is disconnected from the network 104.

In an example, a pre-set criterion includes a caller designation. In this example, a criterion is pre-set by the user to play an associated desired voicemail greeting when receiving a call from a certain caller. When a call is received, the identity of the caller (e.g., via a caller identification) is provided to the voicemail application 308. For example, the signals representing a request to establish a call include data coded within the signal for identifying the caller. In some examples, a phone application on the wireless device 102 receives the phone number of the caller from the communication network 200 and matches the phone number to a contact in an address book application on the wireless device 102, thus identifying the caller. The voicemail application 308 then determines whether the identity of the caller satisfies any pre-set criterion, including the pre-set caller designation. If the caller is the certain caller designated, then the pre-set associated voicemail data set is transmitted to the voicemail server 234, so that the pre-set associated voicemail greeting is played for that certain caller. For all other callers (e.g., as determined using the caller identification), another voicemail data set, such as for a default greeting, will be provided. This allows the user to provide more useful information for certain callers, for example where the user is expecting a call from a certain caller pertaining to a certain subject. Once the call from the certain caller is handled, the voicemail application 308 reverts to a previously set or default voicemail greeting. Thus, the voicemail application 308 is able to dynamically manage voicemail greetings based on a criterion such as a caller designation.

In another example, a pre-set criterion is associated with a scheduled event. In this example, a criterion is pre-set by the user to play an associated desired voicemail greeting during an event scheduled in the user's electronic calendar. When the user sets up a scheduled event using the electronic calendar application, the user is provided with the option of associating a desired voicemail greeting with the event. For the time duration set for the scheduled event, the voicemail application 308 will automatically provide the voicemail server 234 with the associated voicemail data set for the associated voicemail greeting rather than, for example, another default voicemail greeting. This allows the user to provide more detailed information to callers, for example the user can let the caller know the time that the user will be available to take a call after the scheduled event. Once the time duration for the scheduled event is over, the voicemail application 308 reverts to a previously set or default voicemail data set. Thus, the voicemail application 308 is able to dynamically manage voicemail greetings based on a criterion such as an event designation.

In another example, a pre-set criterion is associated with a location designation. In this example, a criterion is pre-set by the user to play an associated desired voicemail greeting when the wireless device 102 is at a certain location, for example as determined by a global positioning system (GPS) application in the wireless device 102. When the wireless device 102 is at a location that satisfies the location criterion, the desired voicemail data set is provided to the voicemail server 234 automatically. For example, this allows the user to ensure that an "after work hours" greeting is played whenever the wireless device 102 (and by extension the user) is at a home location. This relieves the user of the burden and hassle of having to remember to change the voicemail greeting every time the user goes home from the office. Once the wireless device 102 leaves the designated location, the voicemail application 308 reverts to a previously set or default voicemail data set. Thus, the voicemail application 308 is able to dynamically manage voicemail greetings based on a criterion such as a location designation.

In another example, a pre-set criterion is a speed designation. In this example, a criterion is pre-set by the user to play an associated desired voicemail greeting when the wireless device 102 is at certain speeds, for example as determined by the GPS application. The speed designation can be set to be a range of speeds, a maximum speed or a minimum speed. When the wireless device 102 is at a speed that satisfies the speed designation (e.g., above a maximum walking speed of 5 km/hour), the desired voicemail data set is provided to the voicemail server 234. This allows the user to automatically set a temporary voicemail greeting explaining the situation when the user is unavailable to answer a call, for example while driving. Once the wireless device 102 is outside of the designated speed (e.g., returns to a speed less than 5 km/hour), the voicemail application 308 reverts to a previously set or default voicemail data set. Thus, the voicemail application 308 is able to dynamically manage voicemail greetings based on a criterion such as a speed designation.

In the above examples, voicemail greetings are managed dynamically and automatically, based on one or more pre-set criteria. The voicemail greetings are managed using the voicemail application 308 on the wireless device 102, thus the voicemail server 234 does not need to be aware of any criteria or involved in the determination or selection of which voicemail greeting(s) is selected. This avoids the need for an involved interface with the voicemail server 234, reduces data flow, and allows the user to pre-set criteria and voicemail greetings without having to access the voicemail server 234.

The voicemail application 308 allows a user to create new criteria (e.g., including new logical combinations of existing criteria) and to create (i.e., record) new voicemail messages. In some example embodiments, a criterion is pre-set to be associated with a voicemail message in one of the following ways:

In some examples, a new criterion is created using the voicemail application 308, and is associated with any one existing voicemail data set;

In some examples, a new criterion is created using the voicemail application 308, and a new voicemail greeting is recorded and a new voicemail data set is associated with the newly created criterion;

In some examples, a new voicemail data set is created using the voicemail application 308, and is associated with one or more criteria, including the creation of new criteria.

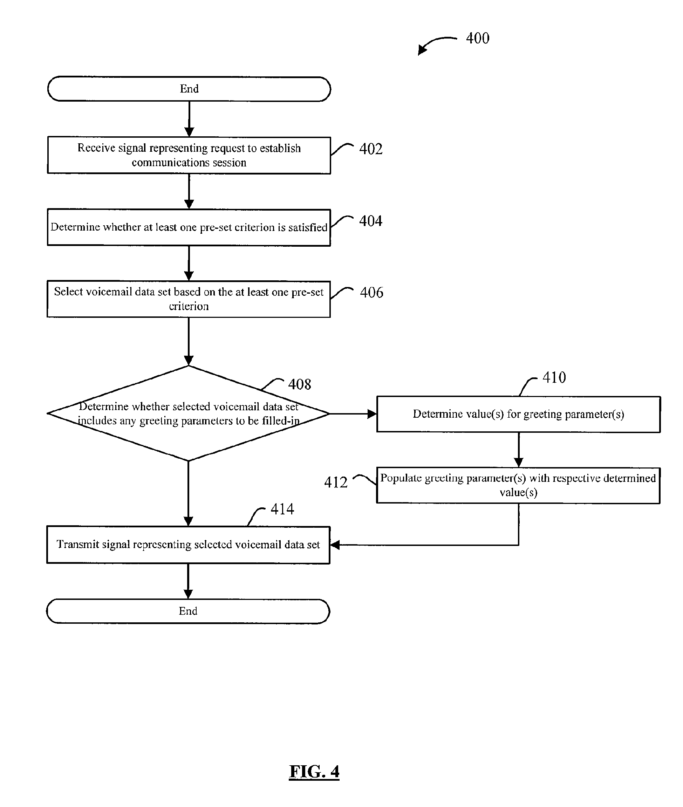

Reference is now made to FIG. 4 illustrating a method 400 of managing voicemail greetings, in accordance with an example embodiment. The method 400 is useful for providing a desired voicemail data set to the voicemail server 234 in accordance with pre-set criteria, as described above. In this example, the method 400 takes place at the voicemail application 308.

At 402, a signal representing a request to establish a communications session for an incoming voice call is received from the voicemail server 234. The signal from the voicemail server 234, in some examples, includes data coded within the signal, which may include information about the call, such as a caller identification or time of call.

At 404, it is determined whether at least one pre-set criterion stored in the voicemail application 308 is satisfied. This determination is carried out by the voicemail application 308 based on information from at least one application, function and/or service stored wholly or partially on the wireless device 102, or otherwise executable by the wireless device 102. Additionally or alternatively, in some examples, this determination is also based on the data coded within the signal received from the voicemail server 234. In some examples, the voicemail-application interface 310 queries the at least one application, function and/or service to obtain respective information for making this determination.

At 406, a voicemail data set is selected. For example, the voicemail data set is selected from one or more voicemail data sets stored in the voicemail application 308. This selection is based on whether the at least one pre-set criterion is satisfied, as determined in 404. For example, when a given pre-set criterion is satisfied, the voicemail data set associated with that pre-set criterion is selected. Typically, each pre-set criterion is associated with one voicemail data set. In some examples, if no pre-set criteria are satisfied, a default voicemail data set is selected. Where there is a conflict in selecting a voicemail data set (e.g., two or more criteria associated with different respective voicemail data sets are satisfied), conflict resolution can be carried out, for example based on the relative priorities of the pre-set criteria, as described above.

In some examples, at 408, it is determined whether the selected voicemail data set includes any greeting parameters to be filled in. For example, the voicemail data set can include a greeting parameter (e.g., current time, current availability) as part of the voicemail greeting, and the greeting parameter indicates the value type (e.g., time of day, availability status, etc.) that should be used to fill in the greeting parameter.

At 410, if the selected voicemail data set includes at least one greeting parameter to be filled in, then the appropriate respective value(s) for the at least one greeting parameter is determined. For example, one or more values for the respective one or more greeting parameters are determined from one or more respective applications, functions and/or services by querying the respective applications and/or services using the voicemail-application interface 310.

At 412, the at least one greeting parameter is populated with at least one respective determined value.

At 414, a signal representing the selected voicemail data set is transmitted to the voicemail server 234. Where there is a greeting parameter, a signal representing at least one respective determined value for the greeting parameter is also transmitted.

Thus, the user is able to more effectively manage incoming calls to the voice mailbox. The caller is also provided with a greeting that can be tailored to the specific circumstances of the call, and can include pertinent parameters (e.g., status of user, location of user). This tailored greeting can help the caller to decide, for example, whether or not to leave a voicemail greeting in the user's voice mailbox.

Examples of user interfaces for managing voicemail greetings are now described. These user interfaces are suitable for certain functionalities of the voicemail application 308 described above.

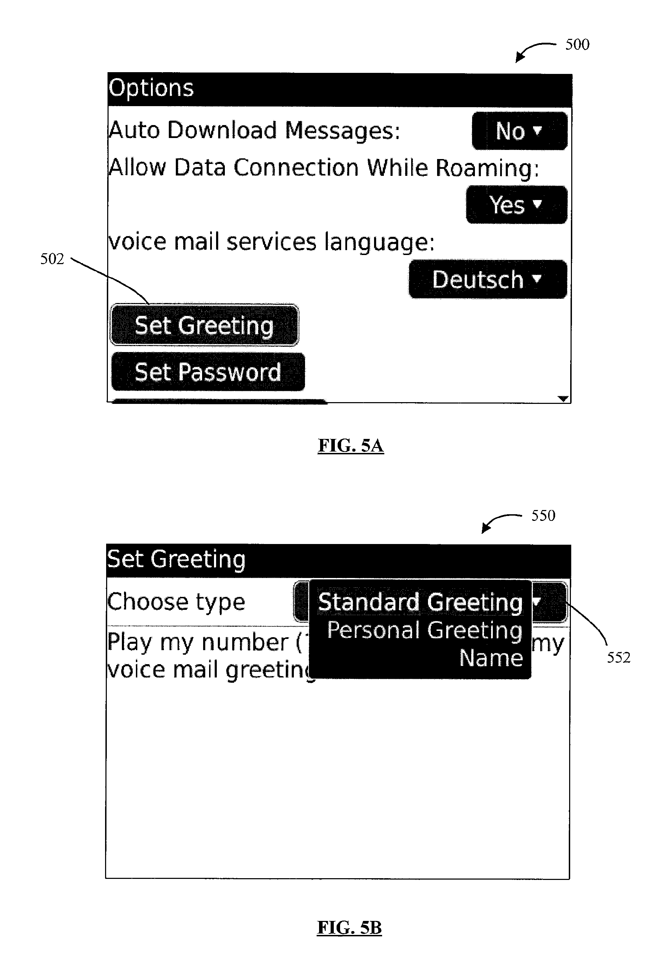

FIGS. 5A and 5B illustrate example user interfaces 500, 550 for setting a voicemail greeting. FIG. 5A shows the user interface 500, which, for example, a user accesses by selecting "Options" from a voicemail management menu (not shown) provided by the voicemail application 308. The user interface 500 includes a "Set Greeting" option 502. Other options in this example include language options, download options, data connection options, and password options. FIG. 5B shows the user interface 550 presented when the user selects the "Set Greeting" option 502. In the example shown, the user is presented with a "Choose Type" menu 552, which provides a list of selectable recorded greetings. Typically, there is at least one default greeting available. Once the greeting is selected, the selection is noted and stored in the voicemail application 308, to be presented to a caller.

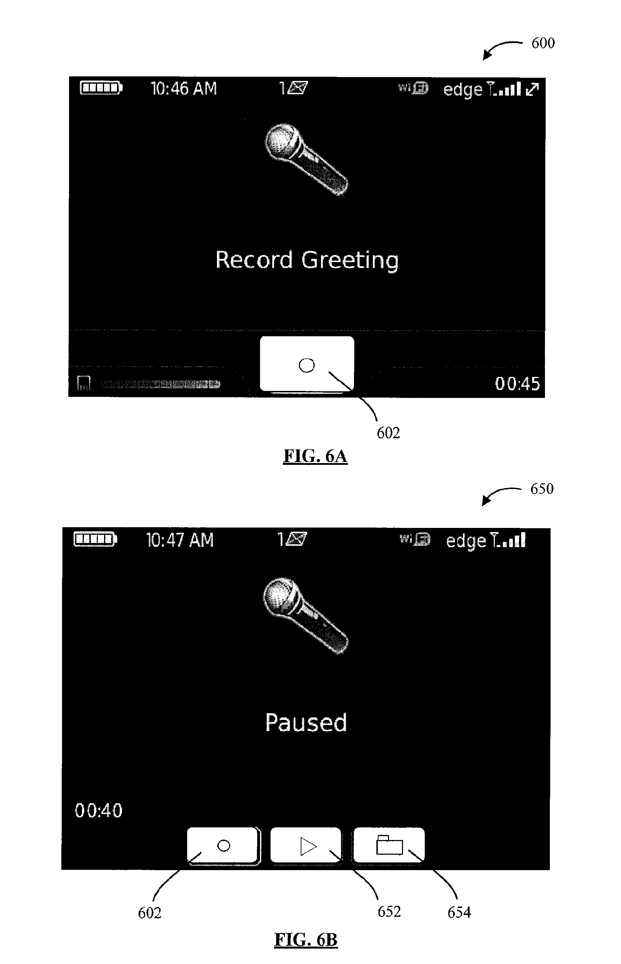

The user also has the option of recording a new greeting, for example, as shown in FIGS. 6A and 6B, using the user interfaces 600, 650. The option to record a new greeting is selectable from a voicemail management menu provided by the voicemail application 308, for example. In FIG. 6A, the user interface 600 includes a record button 602 that is selected to initiate recording of a new greeting. The recording can be paused or ended by selecting the record button 602 again during recording. In FIG. 6B, the user interface 650 is shown when the recording is paused or ended. The user interface 650 includes the record button 602, selectable to continue recording; a play button 652, selectable to play back the recorded greeting; and a save button 654, selectable to save the recorded greeting.

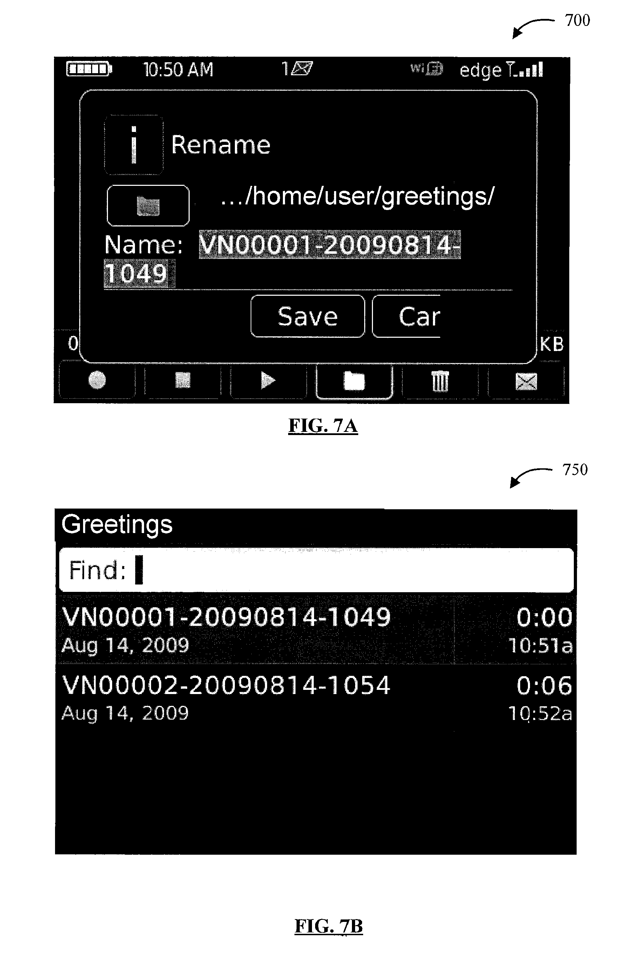

FIGS. 7A and 7B illustrate example user interfaces 700, 750 presented when the user chooses to save a recorded greeting. User interface 700 allows the user to select the folder to which the recorded greeting should be saved, and to provide the recorded greeting with a name for future reference. User interface 750 allows the user to navigate among data sets for saved greetings.

An example of a pre-set criterion for selecting a desired voicemail data set is an event designation. An event designation is associated with a scheduled event in an electronic calendar application on the wireless device 102.

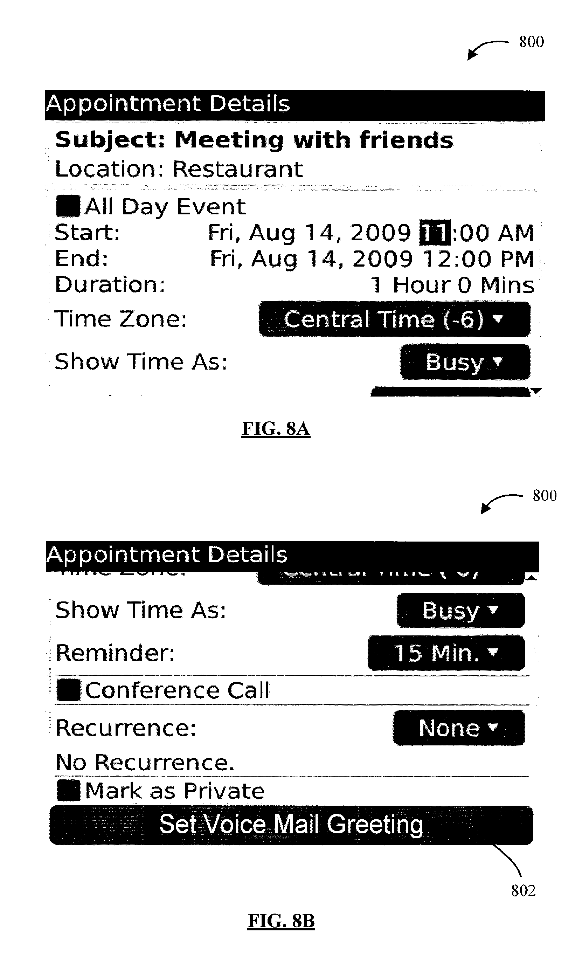

FIGS. 8A and 8B illustrate an example user interface 800 for setting a pre-set criterion, in this case an event designation designating a scheduled event. As shown in FIG. 8A, the user interface 800 is a typical interface for setting up a scheduled event in a typical electronic calendar application, including options such as event time, event location, and event status (e.g., busy). As shown in FIG. 8B, the user interface provides further options (e.g., accessible by scrolling down), including a "Set Voice Mail Greeting" option 802. Selection of the option 802 allows the user to pre-set an event criterion for the scheduled event that selects a certain desired voicemail greeting for the duration of the scheduled event. This results in the voicemail data set for the desired voicemail greeting to be transmitted to the voicemail server 234 to be played to a caller who dials in during the duration of the scheduled event. The user interface 800 in this example is presented through the electronic calendar application, although the functionality of the option 802 is actually provided through the voicemail-application interface 310 rather than through the electronic calendar application.

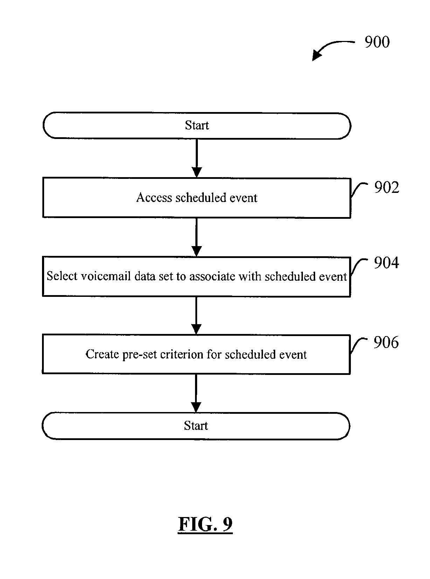

FIG. 9 illustrates an example method 900 for managing voicemail greetings, in this example based information from a calendar application on the wireless device 102.

At 902, a scheduled event is accessed. In this example, the scheduled event is accessed through a calendar application. The scheduled event can be a newly-created event or an already existing event. For example, the interface 800 is presented to the user via the calendar application.

At 904, a voicemail data set is selected to be associated with the scheduled event. In this example, the voicemail-application interface 310 provides the calendar application with a user option 802 for selecting the voicemail data set and this user option is not available through the calendar application when the voicemail-application interface 310 is not present on the wireless device 102. In this example, the voicemail data set is for an existing voicemail greeting, however in other examples a new voicemail greeting can be recorded.

At 906, a pre-set criterion is created. The pre-set criterion is an event designation, designating the scheduled event, and associated with the desired voicemail data set.

Having set up the pre-set criterion, when a call is received during the duration of the designated scheduled event, the associated desired voicemail data set will be provided to the voicemail server 234, instead of a default voicemail data set.

In some examples, the voicemail server 234 is an enterprise server that has access to information about applications and/or services on the wireless device 102. In such examples, the voicemail application 308 including the voicemail-application interface 310 can be duplicated in the voicemail server 234, to allow the user to manage voicemail greetings through the voicemail server 234, for example where the wireless device 102 is turned off or otherwise not available.

While the steps of the method 400 and the method 900 are shown as occurring in a particular order, it will be appreciated by those skilled in the art that some of the steps are interchangeable and may occur in different orders than that shown without materially affecting the end results of the method 400 and the method 900. The steps described may be carried out by a single module or may be carried out by several different modules.

While the present disclosure refers to a the use of a clickable thumbwheel 160, a keyboard 154, an input device, or similar navigation and input mechanisms for navigation on a wireless device 102, it will be appreciated by those skilled in the art that navigation, input or both may be provided by the use of a touch sensing component, such as a touchscreen display. The display 142 may be a touchscreen display, or the touching sensing component may be separate from the display 142. Navigation or input on a touchscreen display may be by contacting the display directly with fingers, or by using a stylus or a similar pointing device.

While the present disclosure includes description of a method, a person of ordinary skill in the art will understand that the present disclosure is also directed to an apparatus for carrying out the disclosed method and including apparatus parts for performing each described method step, be it by way of hardware components, a computer programmed by appropriate software to enable the practice of the disclosed method, by any combination of the two, or in any other manner. Moreover, an article of manufacture for use with the apparatus or computer program product, such as a prerecorded storage device or other similar computer readable medium having computer executable instructions tangibly recorded thereon, or a computer data signal carrying computer readable program instructions may direct an apparatus to facilitate the practice of the disclosed method. It is understood that such apparatus, articles of manufacture, and computer data signals also come within the scope of the present disclosure.

The example embodiments of the present disclosure described above are intended to be examples only. Those of skill in the art may effect alterations, modifications and variations to the particular example embodiments without departing from the intended scope of the present disclosure. In particular, selected features from one or more of the above-described example embodiments may be combined to create alternative example embodiments not explicitly described, features suitable for such combinations being readily apparent to persons skilled in the art. The subject matter described herein in the recited claims intends to cover and embrace all suitable changes in technology.

## Claims

1. A method, performed by a wireless handheld telephony device (102), comprising:
receiving, from a telecommunications server (234), signals representing a request to establish with the device a communications session for an incoming call;
determining, using at least one of data coded within the received signals and data associated with at least one application executable by the device (102), whether at least one pre-set voicemail criterion has been satisfied;
selecting, based on the determination whether at least one pre-set voicemail criterion has been satisfied, a voicemail data set from a plurality of voicemail data sets stored in a memory resident on the device (102) to be transmitted to the server (234); and
transmitting to the server (234) signals representing the selected voicemail data set.

2. The method of claim 1, wherein the determining whether at least one pre-set voicemail criterion has been satisfied is performed using data associated with the at least one application executable by the device (102).

3. The method of claim 1 or claim 2 wherein data coded within the received signals is associated with a voicemail data set and is used in the determining whether the at least one pre-set voicemail criterion has been satisfied.

4. The method of any one of claims 1 to 3 wherein there are at least two pre-set voicemail criteria, each of the at least two pre-set voicemail criteria being associated with a different associated voicemail data set, each of the at least two pre-set criteria associated with a different relative priority, and the selecting the voicemail data set is performed using the highest priority pre-set criterion.

5. The method of any one of claims 1 to 4 wherein the selected voicemail data set includes at least one greeting parameter.

6. The method of any one of claims 1 to 5 wherein the at least one pre-set criterion comprises at least one of: a caller designation, a location designation, a time designation, a speed designation, a battery level designation, a profile setting designation, an event designation.

7. The method of claim 6 wherein the at least one application comprises a calendar application and the at least one pre-set criterion comprises an event designation associated with an event scheduled in the calendar application, and the pre-set criterion may be satisfied at least for a duration of the scheduled event.

8. The method of claim 6 wherein the wireless handheld telephony device (102) comprises a global positioning system (GPS) and the at least one pre-set criterion comprises at least one of a speed designation and a location designation determined using the GPS.

9. The method of claim 6 wherein at least one of the at least one pre-set criterion comprises a logical combination of two or more designations.

10. A wireless handheld telephony device (102) comprising a microprocessor (104), machine-readable memory (144, 146, 148), and machine-readable instructions configured to cause the device (102) to carry out the method of any one of claims 1 to 9.

11. A computer program product having a computer readable medium tangibly embodying computer executable instructions configured to cause a wireless handheld telephony device (102) to carry out the method of any one of claims 1 to 9.

## Amended claims

### Amended claims in accordance with Rule 137(2) EPC.

**1.** A method, performed by a wireless handheld telephony device (102), comprising:
receiving, from a telecommunications server (234), signals representing a request to establish with the device a communications session for an incoming call;
querying at least one application executable by the device (102);
determining, using data obtained from said at least one application executable by the device (102) via the querying, whether at least one pre-set voicemail criterion has been satisfied;
selecting, based on the determination whether at least one pre-set voicemail criterion has been satisfied, a voicemail data set from a plurality of voicemail data sets stored in a memory resident on the device (102) to be transmitted to the server (234); and
transmitting to the server (234) signals representing the selected voicemail data set.

**2.** The method of claim 1, wherein the determining whether at least one pre-set voicemail criterion has been satisfied also uses data coded within the received signals.

**3.** The method of claim 1 or claim 2 wherein data coded within the received signals is associated with a voicemail data set and is used in the determining whether the at least one pre-set voicemail criterion has been satisfied.

**4.** The method of any one of claims 1 to 3 wherein there are at least two pre-set voicemail criteria, each of the at least two pre-set voicemail criteria being associated with a different associated voicemail data set, each of the at least two pre-set criteria associated with a different relative priority, and the selecting the voicemail data set is performed using the highest priority pre-set criterion.

**5.** The method of any one of claims 1 to 4 wherein the selected voicemail data set includes at least one greeting parameter.

**6.** The method of any one of claims 1 to 5 wherein the at least one pre-set criterion comprises at least one of: a caller designation, a location designation, a time designation, a speed designation, a battery level designation, a profile setting designation, an event designation.

**7.** The method of claim 6 wherein the at least one application comprises a calendar application and the at least one pre-set criterion comprises an event designation associated with an event scheduled in the calendar application, and the pre-set criterion may be satisfied at least for a duration of the scheduled event.

**8.** The method of claim 6 wherein the wireless handheld telephony device (102) comprises a global positioning system (GPS) and the at least one pre-set criterion comprises at least one of a speed designation and a location designation determined using the GPS.

**9.** The method of claim 6 wherein at least one of the at least one pre-set criterion comprises a logical combination of two or more designations.

**10.** A wireless handheld telephony device (102) comprising a microprocessor (104), machine-readable memory (144, 146, 148), and machine-readable instructions configured to cause the device (102) to carry out the method of any one of claims 1 to 9.

**11.** A computer program product having a computer readable medium tangibly embodying computer executable instructions configured to cause a wireless handheld telephony device (102) to carry out the method of any one of claims 1 to 9.
